# EUROPÄISCHE PATENTSCHRIFT

(11) **EP 2 952 391 B1**
(45) Veröffentlichungstag und Bekanntmachung des Hinweises auf die Patenterteilung: **27.12.2017**
(21) Anmeldenummer: 15001132.8
(22) Anmeldetag: 17.04.2015
(51) Int. Cl.: B60R 21/06

(54) **TRENN- UND/ODER HALTENETZ**
DEVIDING AND/OR RETAINING NET
FILET DE SÉPARATION ET/OU DE RETENUE

(30) Priorität: 07.06.2014 DE 102014008526
(43) Veröffentlichungstag der Anmeldung: 09.12.2015
(73) Patentinhaber: Nölle-Pepin GmbH & Co. KG., 58332 Schwelm (DE)
(72) Erfinder: Emde, Marc, 58256 Ennepetal (DE)
(74) Vertreter: Lelgemann, Karl-Heinz

(56) Entgegenhaltungen:
- WO-A1-01/34433
- WO-A1-96/08391
- DE-U1-202007 014 706
- DE-U1-202012 009 544
- US-A- 5 339 657

## Beschreibung

Die Erfindung bezieht sich auf ein Trenn- und/oder Haltenetz mit einem elastischen Netzgeflechtteil, dessen Netzmaschen bzw. -rauten durch zueinander geneigt verlaufende, jeweils mehrere Netzstränge aufweisende Strangscharen gebildet sind, und einem elastischen Randglied, das zumindest an einem Teilabschnitt des Netzgeflechtrands angeordnet ist.

Bei aus dem Stand der Technik bekannten entsprechenden Trenn- und/oder Haltenetzen ist häufig der Durchhang an mit einem elastischen Randglied versehenen Teilabschnitten des Netzgeflechtrands vergleichsweise groß, wodurch das Trenn- und/oder Haltenetz häufig den gestellten ästhetischen oder zuweilen auch technischen Anforderungen nicht genügt.

Ausgehend von dem vorstehend geschilderten Stand der Technik liegt der Erfindung die Aufgabe zugrunde, ein Trenn- und/oder Haltenetz zur Verfügung zu stellen, bei dem die genannten technischen und/oder ästhetischen Nachteile vermieden werden.

Das Dokument WO 01/34433 A1 offenbart ein Trenn- und/oder Haltenetz nach dem Oberbegriff von Anspruch 1.

Diese Aufgabe wird erfindungsgemäß durch ein Trenn- und/oder Haltenetz gelöst, bei dem die Netzmaschen bzw. -rauten ausbildende Netzstrangabschnitte in Abhängigkeit von ihrer Anordnung im Netzgeflechtteil so gestaltet sind, dass das elastische Randglied des Trenn- und/oder Haltenetzes im montierten Zustand desselben nur einen sehr niedrigen oder keinen Durchhang aufweist. Hierdurch wird zum einen die ästhetische Form des erfindungsgemäßen Trenn- und/oder Haltenetzes erheblich verbessert, wobei auch technische Nachteile aufgrund eines vergleichsweise undefiniert gestalteten Randbereichs des Trenn- und/oder Haltenetzes sicher ausgeschlossen werden.

Die Netzstrangabschnitte des erfindungsgemäßen Trenn- und/oder Haltenetzes unterscheiden sich in einer Ausführungsform der Erfindung hinsichtlich der Zusammensetzung ihres Werkstoffs in Abhängigkeit von ihrer Anordnung im Netzgeflechtteil.

Kumulativ oder alternativ können sich die Netzstrangabschnitte auch hinsichtlich der Menge des für sie verwendeten Werkstoffs in Abhängigkeit von ihrer Anordnung im Netzgeflechtteil unterscheiden.

Des weiteren ist es möglich, dass sich die Netzstrangabschnitte hinsichtlich der Spannungsbeaufschlagung, der sie bei der Herstellung des Netzgeflechtteils unterworfen werden, in Abhängigkeit von ihrer Anordnung im Netzgeflechtteil unterscheiden.

Gemäß einer vorteilhaften Ausführungsform weist das erfindungsgemäße Trenn- und/oder Haltenetz mehrere elastische Randglieder auf, die sämtlich im montierten Zustand des Trenn- und/oder Haltenetzes einen sehr niedrigen oder keinen Durchhang haben.

Gemäß einer weiteren vorteilhaften Ausführungsform des erfindungsgemäßen Trenn- und/oder Haltenetzes sind nicht mit dem zumindest einen elastischen Randglied versehene Teilabschnitte des Netzgeflechtrands mit zumindest einem vergleichsweise starren Randteil versehen.

Vorteilhaft sind zwischen dem zumindest einen elastischen Randglied und dem zumindest einen vergleichsweise starren Randteil Übergangsglieder angeordnet.

Im Folgenden wird die Erfindung anhand einer Ausführungsform unter Bezugnahme auf die Zeichnungen näher erläutert. Es zeigen:
- Figur 1: eine Prinzipdarstellung eines erfindungsgemäßen Trenn- und/oder Haltenetzes; und
- Figur 2: zum Vergleich ein entsprechendes Trenn- und/oder Haltenetz gemäß dem Stand der Technik.

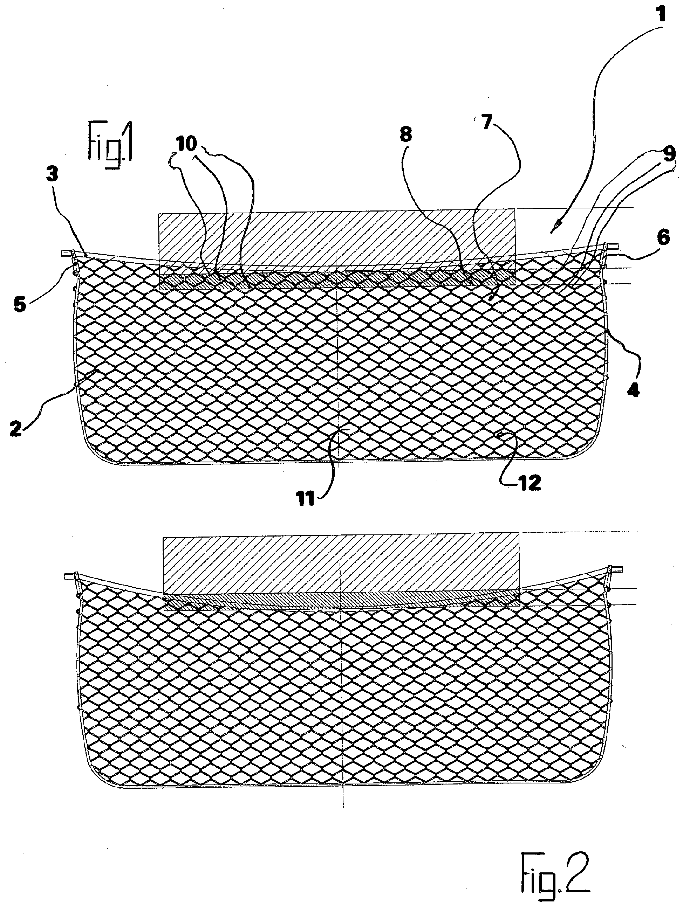

Ein in Figur 1 anhand einer Ausführungsform dargestelltes erfindungsgemäßes Trenn- und/oder Haltenetz 1 hat ein Netzgeflechtteil 2, ein elastisches Randglied 3, ein vergleichsweise starres Randteil 4 und zwei Übergangsglieder 5, 6, die zwischen dem vergleichsweise starren Randteil 4 und dem elastischen Randglied 3 angeordnet sind.

Das Netzgeflechtteil 2 wird im dargestellten Ausführungsbeispiel des erfindungsgemäßen Trenn- und/oder Haltenetzes durch zwei zueinander geneigt verlaufende Strangscharen 7, 8 gestaltet. Jede dieser beiden Strangscharen 7, 8 besteht aus einer Vielzahl im dargestellten Ausführungsbeispiel etwa parallel zueinander verlaufender Netzstränge 9, 10, die zur Ausgestaltung von Netzmaschen bzw. -rauten 11 untereinander verbunden sind.

Das Netzgeflechtteil 2 ist an seinem in Figur 1 oberen Netzgeflechtrand mit dem elastischen Randglied 3, welches im dargestellten Ausführungsbeispiel als Gummizug 3 ausgebildet ist, versehen. Der Gummizug 3 wird von den beiden jeweils als Gummizughalter 5 bzw. 6 ausgebildeten Übergangsgliedern 5, 6 gehaltert, wobei die Gummizughalter 5, 6 auf die freien Enden des als Drahtbügel 4 ausgebildeten vergleichsweise starren Randteils 4 aufgesetzt sind. Durch die beiden Gummizughalter (5, 6) sind der Gummizug 3 und der Drahtbügel 4 miteinander verbunden.

Bei dem in Figur 1 gezeigten erfindungsgemäßen Trenn- und/oder Haltenetz 1 ist jeder einzelne Netzstrangabschnitt 12, von denen jeweils vier eine Netzmasche bzw. -raute 11 bilden, entsprechend seiner Anordnung im elastischen Netzgeflechtteil 2 ausgebildet. Aufgrund der jeweiligen Anordnung eines Netzstrangabschnitts 12 innerhalb des Netzgeflechtteils 2 ergibt sich im montierten Zustand des erfindungsgemäßen Trenn- und/oder Haltenetzes 1 ein bestimmter Beanspruchungszustand dieses Netzstrangabschnitts 12. Dies wird im Falle des erfindungsgemäßen Trenn- und/oder Haltenetzes 1 bei der Auslegung des betreffenden Netzstrangabschnitts 12 berücksichtigt, um sicherzustellen, dass - im dargestellten Ausführungsbeispiel - der Gummizug 3 keinen oder einen möglichst geringen Durchhang aufweist.

Dies kann beispielsweise dadurch bewerkstelligt werden, dass sich die Netzstrangabschnitte 12 hinsichtlich der Zusammensetzung ihres Werkstoffs, hinsichtlich der Menge des für sie verwendeten Werkstoffs und/oder hinsichtlich der Spannungsbeaufschlagung, mit der sie bei der Herstellung des Netzgeflechtteils 2 unterworfen werden, in Abhängigkeit von ihrer Anordnung im Netzgeflechtteil 2 unterscheiden.

Figur 2 zeigt zum Vergleich ein dem Stand der Technik entsprechendes Trenn- und/oder Haltenetz, bei dem die Netzstrangabschnitte 12 des Netzgeflechtteils 2 in aus dem Stand der Technik bekannter Weise ausgestaltet bzw. hergestellt sind. Aus einem Vergleich der Figuren 1 und 2 geht hervor, dass der Durchhang des Gummizugs 3 im Falle des erfindungsgemäßen Trenn- und/oder Haltenetzes erheblich geringer ist als bei dem Trenn- und/oder Haltenetz gemäß dem Stand der Technik.

## Patentansprüche

1. Trenn- und/oder Haltenetz, mit einem elastischen Netzgeflechtteil (2), dessen Netzmaschen bzw. -rauten (11) durch zueinander geneigt verlaufende, jeweils mehrere Netzstränge (9, 10) aufweisende Strangscharen (7, 8) gebildet sind, und einem elastischen Randglied (3), das zumindest an einem Teilabschnitt des Netzgeflechtrands angeordnet ist, **dadurch gekennzeichnet, dass** die Netzmaschen bzw. -rauten (11) ausbildende Netzstrangabschnitte (12) in Abhängigkeit von ihrer Anordnung im Netzgeflechtteil (2) so gestaltet sind, dass das elastische Randglied (3) des Trenn- und/oder Haltenetzes (1) im montierten Zustand desselben nur einen sehr niedrigen oder keinen Durchhang aufweist, indem die Netzstrangabschnitte (12) sich hinsichtlich der Zusammensetzung ihres Werkstoffs und/oder hinsichtlich der Spannungsbeaufschlagung, der sie bei der Herstellung des Netzgeflechtteils (2) unterworfen werden, in Abhängigkeit von ihrer Anordnung im Netzgeflechtteil (2) unterscheiden.

2. Trenn- und/oder Haltenetz nach Anspruch 1, dessen Netzstrangabschnitte (12) sich hinsichtlich der Menge des für sie verwendeten Werkstoffs in Abhängigkeit von ihrer Anordnung im Netzgeflechtteil (2) unterscheiden.

3. Trenn- und/oder Haltenetz nach Anspruch 1 oder 2, mit mehreren elastischen Randgliedern (3), die sämtlich im montierten Zustand des Trenn- und/oder Haltenetzes einen sehr niedrigen oder keinen Durchhang aufweisen.

4. Trenn- und/oder Haltenetz nach einem der Ansprüche 1 bis 3, bei dem nicht mit dem zumindest einen elastischen Randglied (3) versehene Teilabschnitte des Netzgeflechtrands mit zumindest einem vergleichsweise starren Randteil (4) versehen sind.

5. Trenn- und/oder Haltenetz nach Anspruch 4, bei dem zwischen dem zumindest einen elastischen Randglied (3) und dem zumindest einen vergleichsweise starren Randteil (4) Übergangsglieder (5, 6) angeordnet sind.

## Claims

1. A separating and/or holding net, comprising an elastic netting part (2), the rhombic mesh openings (11) of which are formed of string groups (7, 8) running at an angle to one another and each comprising a plurality of net filaments (9, 10), and an elastic edge member (3) arranged at least on a section of the net mesh edge, **characterized in that** the net filament sections (12) forming the rhombic mesh openings (11) are designed in dependence on the arrangement thereof in the netting part (2) in such a manner that the elastic edge member (3) of the separating and/or holding net (1), in the assembled state thereof, has only a very low amount of slack or no slack **in that** the net filament sections (12) thereof differ in terms of the composition of the material thereof and/or in terms of the amount of tension to which they are subjected to in the manufacture of the netting part (2) in dependence on their position in the netting part (2).

2. The separating and/or holding net according to claim 1, the net filament sections (12) of which differ in terms of the amount of the material used therefor in dependence on their arrangement in the netting part (2) .

3. The separating and/or holding net according to claim 1 or 2, comprising a plurality of elastic edge members (3), all of which, in the assembled state of the separating and/or holding net, have a very low amount of slack or no slack.

4. The separating and/or holding net according to any one of claims 1 to 3, wherein sections of the netting edge that are not provided with at least one elastic edge member (3) are provided with at least one relatively stiff edge part (4).

5. The separating and/or holding net according to claim 4, wherein couplings (5, 6) are arranged between the at least one elastic edge member (3) and the at least one relatively stiff edge part (4).

## Revendications

1. Filet de séparation et/ou de retenue avec une partie tissée de filet (2) dont les mailles ou losanges de filet (11) sont formés par des ensembles de corde (7,8) inclinés l'un par rapport à l'autre, comportant respectivement plusieurs cordes de filet (9,10) et un élément de bord (3) élastique qui est disposé au moins sur une partie de section de la corde tissée, **caractérisé en ce que** les sections de corde de filet (12) constituant les mailles ou losanges de filet (11) sont configurées en fonction de leur disposition dans la partie tissée de filet (2) de telle sorte que l'élément de bord élastique (3) du filet de séparation et/ou de retenue (1) ne comporte à l'état monté de celui-ci qu'un très faible fléchissement ou pas du tout, les sections de corde de filet (12) s'entrecroisant en fonction de leur disposition dans la partie tissée de filet (2) en ce qui concerne la composition de leur matériau et/ou en ce qui concerne l'application de contrainte à laquelle elles sont soumises lors de la fabrication de la partie tissée de filet (2).

2. Filet de séparation et/ou de retenue selon la revendication 1, dont les sections de corde de filet (12) s'entrecroisent en ce qui concerne la quantité de matériau utilisée pour celles-ci en fonction de leur disposition dans la partie tissée de filet (2).

3. Filet de séparation et/ou de retenue selon la revendication 1 ou 2 avec plusieurs éléments de bordure élastiques (3), qui comportent tous à l'état monté du filet de séparation et/ou de retenue un très faible fléchissement ou pas du tout.

4. Filet de séparation et/ou de retenue selon l'une quelconque des revendications 1 à 3 pour lequel les parties de section du bord tissé de filet non dotées d'au moins un élément de bordure élastique (3) sont dotées d'au moins une partie de bordure comparativement rigide.

5. Filet de séparation et/ou de retenue selon la revendication 4 pour lequel des éléments de transition (5, 6) sont disposés entre au moins un élément de bordure élastique (3) et au moins un élément de bordure (4) comparativement rigide.
